# EUROPÄISCHE PATENTANMELDUNG

(11) **EP 2 385 279 A2**
(43) Veröffentlichungstag der Anmeldung: **09.11.2011**
(21) Anmeldenummer: 11163146.1
(22) Anmeldetag: 20.04.2011
(51) Int. Cl.: F16K 1/42

(54) **Prozessventil mit flexibler Dichtkante**

(30) Priorität: 07.05.2010 DE 102010016845
(71) Anmelder: Samson AG, 60314 Frankfurt (DE)
(72) Erfinder: Nebel, Eugen, 61130 Nidderau-Windecken (DE)
(74) Vertreter: Borchert, Uwe Rudolf

(57) **Zusammenfassung**

Prozessventil zur Regelung und Absperrung eines Fluidstroms, umfassend einen Ventilsitz (10, 30) zur Aufnahme eines bewegbaren Ventilkörpers (14, 32) in einer Durchgangsbohrung (12, 36), wobei der Ventilsitz (14, 32) und der Ventilkörper (14, 32) an einer Dichtkante (18, 38) aneinander pressbar sind, um einen Fluidstrom durch das Prozessventil zu verhindern, wobei durch zumindest eine umlaufend eingebrachte Nut (20, 36), zwischen der Nut (20, 36) und der Dichtkante (18, 38) eine flexible Dichtlippe (26, 44) gebildet wird, dadurch gekennzeichnet, dass die Geometrie der Nut (20, 36), derart ausgebildet ist, dass die näher zur Dichtkante (18, 38) liegende Seitenfläche (22, 40) der Nut (20, 36) so verläuft, dass die Stärke der Dichtlippe (26, 44) mit zunehmender Tiefe der Nut (20, 36) ansteigt.

## Beschreibung

Die Erfindung betrifft ein Prozessventil mit flexibler Dichtkante am Ventilsitz, gemäß dem Oberbegriff des Anspruchs 1.

Prozessventile werden zur Regelung von Stoffströmen in Anlagen der chemischen Industrie, Erdölchemie, Kraftwerken und in anderen Bereichen eingesetzt. Sie haben in der Regel ein Gehäuse in dem sich ein fest eingespannter oder ein eingeschraubter Ventilsitz und ein beweglich gelagerter Ventilköper oder ein Stoppkörper befindet. Der Ventilkörper wird in der Regel durch eine Ventilstange geführt. Durch den Abstand des Ventilkörpers zum Ventilsitz wird der Stoffstrom festgelegt und geregelt.

Neben einer Regelfunktion müssen Prozessventile in besimmten Betriebszuständen auch in der Lage sein, den Durchfluss dauerhaft zu stoppen. Dennoch ist es nach dem Stand der Technik nicht möglich eine vollständige leckagefreie Abdichtung von Prozessventilen zu erreichen. Grundsätzlich ist die Leckage umso höher je höher der Druck des abzusperrenden Fluidstroms ist.

Zur Verminderung der Leckage werden vor allem elastische Weichdichtungen eingesetzt, die im Übergang zwischen Ventilsitz und Ventilkörper eingebracht werden. Diese Maßnahme hat den Nachteil, dass sie sich nicht für aggressive Stoffe eignet, da aggressive Stoffe die Materialien der Weichdichtungen auflösen, und so zum einen die Dichtung zerstören, zum anderen durch die gelösten Dichtungsstoffe den Stoffstrom verunreinigen.

Aus der WO 2009 / 033843 A1 ist bekannt, dass die Leckage bei einem Rückschlagventil, dessen Ventilsitz eine Durchgangsbohrung aufweist, durch eine elastisch umlaufende Dichtlippe vermindert werden kann. Diese Dichtlippe wird insbesondere dadurch erzeugt, dass eine zur Durchgangsbohrung konzentrische Ringnut rechteckigen Querschnitts in den Ventilsitz eingebracht wird. Nach der Lehre der WO 2009 / 033843 A1 wird die elastisch umlaufende Dichtlippe erhöhten Leckageanforderungen bei niedrigen Systemdrücken gerecht. Im Falle des Rückschlagventils wirkt sich der Systemdruck auch in einem niedrigen Anpressdruck des Ventilkörpers an die Dichtlippe des Ventilsitzes aus.

Problematisch in dieser Anordnung ist, dass durch die Schwächung des Materials zur Herstellung der Elastizität der Dichtlippe, das geschwächte Material bei hohen Anpressdrücken des Ventilkörpers leicht beschädigt werden kann oder bei hoher Schließfrequenz des Ventils schnell ermüdet und seine Dichtfunktion nicht mehr erfüllen kann.

Der Erfindung liegt die Aufgabe zu Grunde, ein Prozessventil anzugeben, das bei hohen Anpresskräften eine ausnehmend geringe Leckage aufweist und trotzdem aufwandsarm zu fertigen ist.

Die Aufgabe wird durch die kennzeichnenden Merkmale des Anspruchs 1 gelöst.

Die Unteransprüche bilden eine vorteilhafte Weiterbildung der Erfindung.

In bekannter Weise weist der Ventilsitz des Prozessventils eine Durchgangsbohrung auf, die durch einen Ventilkörper bedarfsgemäß abschließbar ist. Um einen Volumenstrom zu unterbinden, wird der Ventilkörper in den Ventilsitz gepresst. Die Berührungslinie zwischen Ventilkörper und Ventilsitz stellt die Dichtkante dar. In bekannter Weise, kann die Dichtkante flexibel ausgebildet sein, indem beabstandet von der Dichtkante eine Nut eingebracht ist, die eine Dichtklappe zwischen Nut und Dichtkante bilden.

Überraschender Weise ergibt es sich, dass durch eine entsprechende Geometrie dieser Nut eine Konfiguration geschaffen werden kann, die zum einen eine definierte Elastizität der Dichtlippe bereitstellt, zum andern aber auch den hohen Anpresskräften des Ventilkörpers eines Prozessventils Rechnung getragen werden kann. Die einzubringende Geometrie ist abhängig von der Duktilität des Materials.

Erfindungsgemäß ist zumindest die Seitenfläche der Nut, die näher zur Dichtkante liegt, derart abgeschrägt, dass Flächen gleicher Spannung vorliegen, indem die Stärke der Dichtlippe mit zunehmender Tiefe ansteigt. Die Spannungen die durch das Einpressen des Ventilkörper in den Ventilsitz auftreten werden durch diese Geometrie gleichmäßige über die gesamte Seitenfläche der Nut verteilt, wodurch Spitzenbelastungen an einzelnen Stellen vermieden werden.

Die dadurch erzielte Kraftverteilung ermöglicht es, die Leckage durch einen Hinterstich der Dichtlippe zu reduzieren, und trotz der hohen Anforderungen und Anpresskräfte eines Prozessventils, die Funktionalität des Prozessventils dauerhaft und zuverlässig zu gewährleisten.

Dementgegen würde eine reine Erhöhung der gesamten Stärke der Dichtlippe, dies bedeutet beispielsweise, ein größerer Abstand der Nut von der Durchgangsbohrung, eine Einbuße an Elastizität der Dichtlippe und damit schlechtere Leckageeigenschaften nach sich ziehen.

In einer ersten Ausführungsform, ist eine erfindungsgemäße Nut als Ringnut in den Ventilsitz eingebracht. Insbesondere liegt die Ringnut konzentrisch zur Durchgangsbohrung und ist in die Oberfläche des Ventilsitzes eingebracht, die in Schließrichtung, parallel zum Ventilhub, des Prozessventils liegt. Durch die erfindungsgemäße Abschrägung der Seitenfläche der Nut, bleibt die Flexibilität der Dichtlippe am Übergang zum Ventilkörper erhalten. Dies hat den Vorteil, dass trotz der hohen Anpresskraft, eine ausreichende Verformbarkeit gegenüber der Kontur des Ventilkörpers gegeben ist, und dennoch die Dichtlippe robust genug ist, die hohen Kräfte aufzunehmen ohne beschädigt zu werden. Durch Einpressen des Ventilkörpers in den Ventilsitz, wird die Dichtkante zunehmend zu einer Dichtfläche, da sich die Dichtlippe entsprechend verformt.

Besonders vorteilhaft ist, dass die Dichtkante die der Durchgangsbohrung zugewandte Kante des Ventilsitzes abgeflacht oder auch gerundet ausgebildet werden kann. Damit wird erreicht, dass durch erhöhte Anpresskraft die Berührungslinie zwischen Ventilkegel und Ventilsitz sich zu einer Fläche ausbildet. Damit werden Bearbeitungstoleranzen ausgeglichen und eine zusätzlich erhöhte Dichtigkeit erreicht.

Alternativ zur Einbringung der Ringnut in die Oberfläche, die in Schließrichutng des Ventilkörpers liegt, kann die eingebrachte Ringnut auch im wesentlichen orthogonal zum Ventilhub des Ventilkörpers in die Durchgangsbohrung des Ventilsitzes eingebracht sein. Dies hat den Vorteil, dass dadurch der elastische Bereich der Dichtkante vergrößert wird. Dies hat wiederum eine Erweiterung des Hubbereichs in dem die gewünschte Dichtigkeit gegeben ist zur Folge.

Gemäß einer weiteren Ausführungsform, kann die Ringnut auch in den Ventilkörper eingebracht sein. Diese kann sowohl in Richtung der Ventilnut, als auch orthogonal dazu liegen.

In einer besonders vorteilhaften Ausführung ist die Nut durch Abdrehen in den Ventilsitz eingebracht. Dadurch können Synergieeffekte bei der Herstellung genutzt werden.

Besonders vorteilhaft ist, dass der Winkel den die der Dichtkante näherliegende Seitenfläche der Nut mit der Oberfläche einschließt flacher ist als der Winkel der Seitenfläche der Nut die von der Dichtkante weiter entfernt ist. Insbesondere verläuft die, der Dichtkante näher liegende Seitenfläche der Nut parabolisch.

Durch die Verbesserung der Leckage eines Prozessventils, mittels der erfindungsgemäßen Nut, wird eine hohe Modularität in der Ausstattung des Prozessventils aufrechterhalten. So können in ein Ventilgehäuse Ventilsitz und Ventilkörper verschiedener Materialien, aber auch Geometrien verbaut werden. In ein Ventilgehäuse gegebener Größe können um unterschiedliche Durchflusskennwerte zu realisieren, unterschiedliche Ventilsitze verbaut werden. Indem eine erfindungsgemäße Dichtlippe erzeugt wird, werden notwendige Umkonstruktionen benachbarter Teile vermieden. Eine zusätzliche Dichtung, die auf die vorhandenen Teile aufgebracht würde, oder eine Zerlegung des Ventilsitzes in mehrere Teile, um eine höhere Elastizität zu erreichen, hätten Umkonstruktionen zur Folge.

Bestehende Bauteile, sowohl Ventilsitze als auch Ventilkörper können erfindungsgemäß nachträglich entweder mit einer Nut versehen werden, oder die entsprechenden Bauteile durch mit einer Nut versehenen Bauteile ersetzt werden ohne weitere Änderungen oder Umkonstruktionen an dem vorhandenen Ventil vornehmen zu müssen.

Auf einfache Weise kann durch geschickte Ausbildung der Dichtlippe durch das Einbringen einer Nut mit der erfindungsgemäßen Geometrie eine günstige robuste Prozessventilsitz bereit gestellt werden.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

In der Zeichnung werden die in der unten aufgeführten Liste der Bezugszeichen verwendeten Begriffe zugeordneten Bezugszeichen verwendet. In der Zeichnung bedeuten:
- Fig. 1: einen Querschnitt durch ein Prozessventil mit Ventilsitz und Ventilkörper mit erfindungsgemäßer Dichtlippe,
- Fig. 2: eine vergrößerte Querschnittansicht der Dichtlippe aus Fig. 1 mit abgeschrägter Seitenwand,
- Fig. 3: einen Querschnitt durch ein Prozessventil mit Ventilsitz und Ventilkörper mit erfindungsgemäßer Dichtlippe, und
- Fig. 4: eine vergrößerte Querschnittansicht der Dichtlippe aus Fig. 3 mit abgeschrägter Seitenwand.

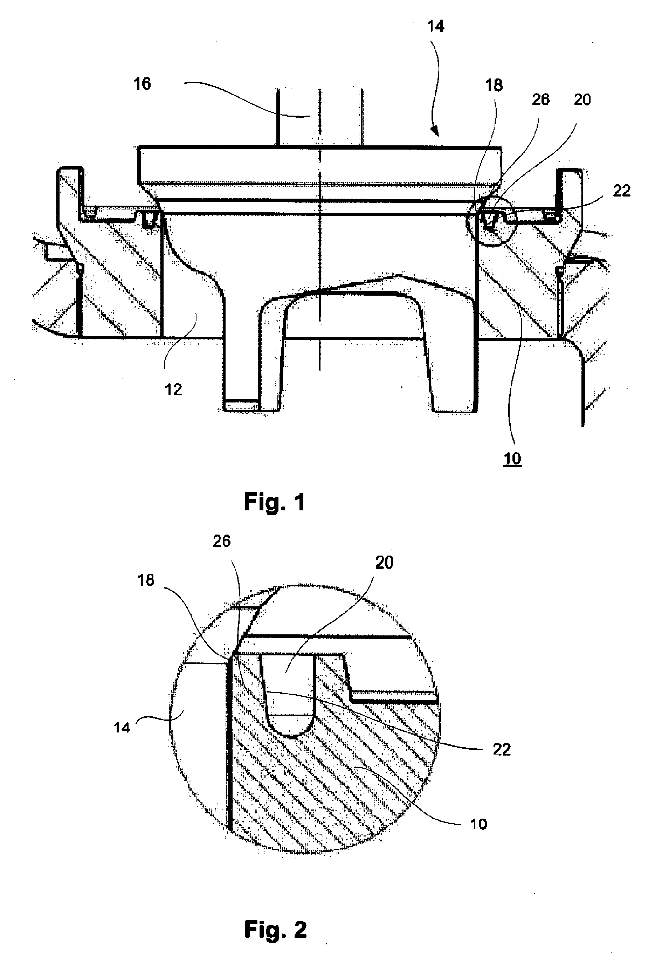

Fig. 1 zeigt einen Ventilsitz 10 mit einer Durchgangsbohrung 12. Die Durchgangsbohrung 12 kann durch den Ventilkörper 14 verschlossen werden, indem über die Ventilstange 16 eine Kraft ausgeübt wird. Konzentrisch zur Durchgangsbohrung 12 ist eine Ringnut 20 in den Ventilsitz eingebracht. Dadurch wird die Dichtlippe 26 zwischen Dichtkante 18 und Ringnut 20 gebildet. Durch den Hinterschnitt der Ringnut 20 wird die Dichtlippe 26 flexibel und kann sich an den Ventilkörper 14 anpassen sofern dieser in den Ventilsitz 10 gedrückt wird. Die Anpresskraft des Ventilkörpers 14 übersteigt 110 kN.

Um diesen Belastungen stand zu halten, ist die Nut 20 verjüngend ausgeführt. Dafür verläuft die Seitenwand 22 der Nut 20 abgeschrägt, wodurch gleichmäßig die Spannung über die Seitenfläche zu verteilt wird. Im Querschnitt ist die Seitenfläche 22 linear abgeschrägt. Dies ermöglicht vor allem eine einfache Herstellung und eine gute Anpassung an die Duktitlität des Materials durch Einstellung des Winkels zur Ventilsitz-Oberfläche.

Der Ventilsitz 10 und der Ventilkörper 14 können dadurch vollständig aus Metall gefertigt werden. Dies ist vor allem bei aggressiven Prozessfluiden von besonderer Bedeutung, da keine zusätzlichen Weichdichtungen zur Erzielung der notwendigen Leckageklasse mehr notwendig sind, denn aggressive Prozessfluide können die Materialien der Weichdichtungen auflösen, und so zum einen die Dichtung zerstören zum anderen durch die gelösten Dichtungsstoffe das Prozessfluid verunreinigen. Dadurch kann eine Leckageklasse V, also ein Leckagestrom von 4 Normlitern / Stunde bei einem anstehenden Druck von 4 bar gewährleistet werden.

Fig. 2 zeigt eine Großansicht des Ventilsitzes 10, in welchem ein Ventilkörper 14 eingedrückt ist. Besonders gut erkennt man hier die abgeschrägte Seitenfläche 22 der Nut 20. Der nun vom Ventilkörper 14 ausgeübte Druck auf die Dichtkante 18 wird durch die Geometrie der Nut 20 gleichmäßig über die Seitenfläche 22 der Nut 20 verteilt und gewährt damit eine große Stabilität der Dichtlippe 26 und sorgt ebenso für eine hohe Flexibilität, wodurch die Leckage des Ventil deutlich reduziert wird. Die Dichtlippe 26 kann Ungenauigkeiten in der Fertigung von Ventilkörper 14 und Ventilsitz 10 bis etwa 60 µm ausgleichen.

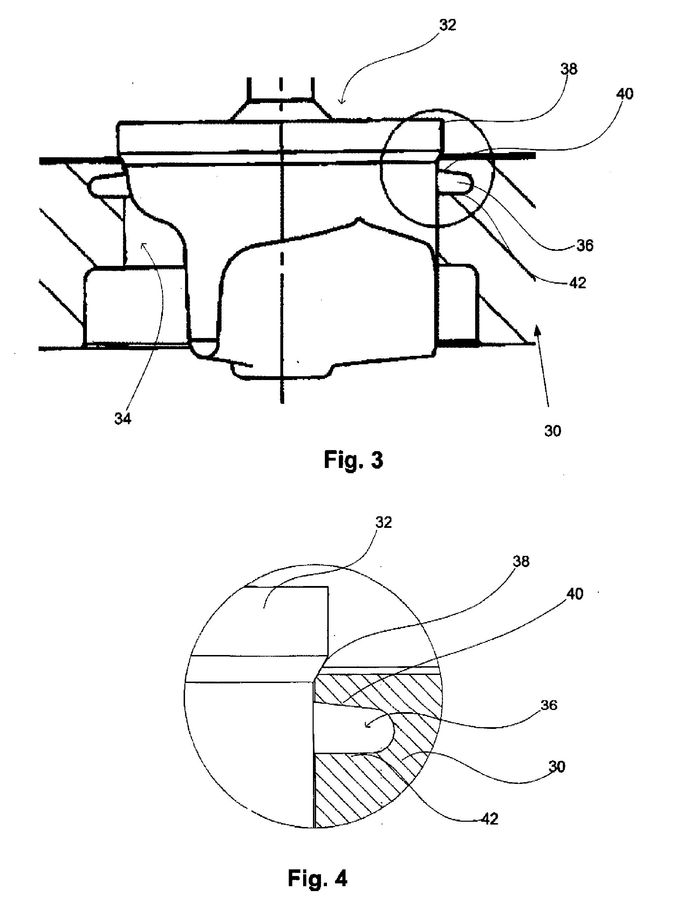

Fig. 3 zeigt einen Querschnitt durch ein Prozessventil umfassend einen Ventilsitz 30 sowie einen Ventilkörper 32. Der Fluidstrom durch das Prozessventil wird abhängig von der Eindringtiefe des Ventilkörpers 32 in den Ventilsitz 30 bestimmt. Soll der Fluidstrom durch eine Durchgangsbohrung 34 komplett unterbunden werden, ist der Ventilkörper 32 vollständig in den Ventilsitz 30 eingepresst.

Um die Leckage bei abgesperrtem Ventil zu minimieren, ist in den Ventilsitz 30 orthogonal zur Achse der Durchgangsbohrung 34 eine Nut 36 eingebracht.

Im abgesperrten Zustand drückt der Ventilkegel 32 an der Dichtkante 38 auf den Ventilsitz 30. Die Dichtkante 38 ist abgeschrägt ausgeführt. Dadurch können Bearbeitungstoleranzen ausgeglichen werden. Die Seitenfläche 40 der Nut 36 ist derart ausgebildet, dass die Dichtlippe 44, welche zwischen der Dichtkante 38 und der Nut 36 gebildet wird, mit zunehmender Tiefe der Nut 36 an Stärke zunimmt. Dies hat den Vorteil, dass die Dichtlippe 44 auch bei hohen Anpresskräften des Ventilkörpers 32 nicht bricht, da durch die Geometrie der Nut die aufgebrachte Kraft gleichmäßig über die Seitenfläche 42 verteilt wird. Dadurch ist eine höhere Stabilität und trotzdem ausreichende Elastizität der Dichtlippe 44 gegeben.

Durch die orthogonal zur Achse der Durchgangsbohrung 34 angeordnete Nut wird eine Dichtlippe 44 erzeugt, die einen sehr großen elastischen Bereich in Richtung der Schließrichtung des Ventils aufweist. Dies erlaubt zum einen, einen erweiterten Hubbereich, in welchem die gewünschte Dichtigkeit gegeben ist, als auch einen Ausgleich von Fertigungstoleranzen.

Fig. 4 zeigt eine Vergrößerung der Nut 36, wobei der Ventilkörper 32 gerade am Ventilsitz 30 anliegt. Besonders gut an dieser Darstellung sieht man die sich im Übergang zwischen Ventilkörper 32 und Ventilsitz 30 ergebende Dichtkante 38. Auch die abgeschrägte Ausführung der Dichtkante 38 ist besonders gut zu erkennen. Auch wird an der Vergrößerung deutlich, dass die Stärke der Dichtlippe 42 von der Oberfläche der Durchgangsbohrung 36 bis zur tiefsten Stelle der Nut 36 kontinuierlich zunimmt.

### Bezugszeichenliste

- 10: Ventilsitz
- 12: Durchgangsbohrung
- 14: Ventilkörper
- 16: Ventilstange
- 18: Dichtkante
- 20: Nut
- 22: erste abgeschrägte Seitenfläche
- 24: zweite abgeschrägte Seitenfläche
- 26: Dichtlippe
- 30: Ventilsitz
- 32: Ventilkörper
- 34: Durchgangsbohrung
- 36: Nut
- 38: Dichtkante
- 40: Seitenfläche
- 41: Seitenfläche
- 44: Dichtlippe

## Patentansprüche

1. Prozessventil zur Regelung und Absperrung eines Fluidstroms, umfassend einen Ventilsitz (10, 30) zur Aufnahme eines bewegbaren Ventilkörpers (14, 32) in einer Durchgangsbohrung (12, 36), wobei der Ventilsitz (14, 32) und der Ventilkörper (14, 32) an einer Dichtkante (18, 38) aneinander pressbar sind, um einen Fluidstrom durch das Prozessventil zu verhindern, wobei durch zumindest eine umlaufend eingebrachte Nut (20, 36), zwischen der Nut (20, 36) und der Dichtkante (18, 38) eine flexible Dichtlippe (26, 44) gebildet wird, **dadurch gekennzeichnet, dass** die Geometrie der Nut (20, 36), derart ausgebildet ist, dass die näher zur Dichtkante (18, 38) liegende Seitenfläche (22, 40) der Nut (20, 36) so verläuft, dass die Stärke der Dichtlippe (26, 44) mit zunehmender Tiefe der Nut (20, 36) ansteigt.

2. Prozessventil nach Anspruch 1 , **dadurch gekennzeichnet, dass** die Nut (20, 36) konzentrisch zur Durchgangsbohrung (12, 34) in den Ventilsitz eingebracht ist.

3. Prozessventil nach Anspruch 1 oder 2, **dadurch gekennzeichnet, dass** die Nut (20, 36) orthogonal zur Achse der Durchgangsbohrung (12, 34) in den Ventilsitz eingebracht ist.

4. Prozessventil nach einem der vorangehenden Ansprüche, **dadurch gekennzeichnet, dass** die Nut (20, 36) in den Ventilkörper (14, 32) eingebracht ist.

5. Prozessventil nach einem der vorangehenden Ansprüche, **dadurch gekennzeichnet, dass** der Ventilsitz (10, 30) ausschließlich aus Metall hergestellt ist.

6. Prozessventil nach einem der vorangehenden Ansprüche, **dadurch gekennzeichnet, dass** die Neigung der Seitenfläche (22, 40) der Nut an der, der Dichtkante (18, 38) näherliegenden Seite flacher ist als die Neigung der von der Dichtkante (18, 38) entfernter liegenden Seitenfläche (24,42).

7. Prozessventil nach einem der vorangehenden Ansprüche, **dadurch gekennzeichnet, dass** die Nut (20, 36) V-förmig eingebracht ist.

8. Prozessventil nach einem der Ansprüche 1 bis 4, **dadurch gekennzeichnet, dass** die, der Dichtkante (18, 38) näherliegende Seitenfläche (22, 40) der Nut (20, 36) parabolisch verläuft.
